# EUROPÄISCHE PATENTSCHRIFT

(11) **EP 2 158 343 B1**
(45) Veröffentlichungstag und Bekanntmachung des Hinweises auf die Patenterteilung: **26.03.2014**
(21) Anmeldenummer: 08735286.0
(22) Anmeldetag: 16.04.2008
(51) Int. Cl.: C25D 5/10, C25D 5/12, C25D 7/10, C25D 5/18, C23C 28/02, F16C 33/14

(54) **VERFAHREN ZUR HERSTELLUNG EINES STRUKTURIERT BESCHICHTETEN GLEITELEMENTS UND DANACH ERHÄLTLICHES GLEITELEMENT**
METHOD FOR PRODUCING A SLIDING ELEMENT COATED IN A STRUCTURED MANNER AND SLIDING ELEMENT THUS OBTAINED
PROCÉDÉ DE PRODUCTION D'UN ÉLÉMENT DE GLISSEMENT POURVU D'UN REVÊTEMENT STRUCTURÉ ET ÉLÉMENT DE GLISSEMENT OBTENU PAR CE PROCÉDÉ

(30) Priorität: 20.06.2007 DE 102007028215
(43) Veröffentlichungstag der Anmeldung: 03.03.2010
(73) Patentinhaber: Federal-Mogul Burscheid GmbH, 51399 Burscheid (DE)
(72) Erfinder: LINDE, Rudolf, 42929 Wermelskirchen (DE); STASCHKO, Klaus, 65232 Taunusstein (DE)
(74) Vertreter: Geyer, Fehners & Partner
(86) Internationale Anmeldenummer: PCT/EP2008/003046
(87) Internationale Veröffentlichungsnummer: WO 2008/154979

(56) Entgegenhaltungen:
- WO-A-00/29647
- WO-A-02/072923
- WO-A-2005/015037
- US-B1- 6 312 579

## Beschreibung

Die Erfindung bezieht sich auf ein Verfahren zur Herstellung eines strukturiert beschichteten Gleitelements, insbesondere eines Gleitlagers, bei dem Metall oder eine Metallegierung elektrolytisch in mindestens zwei Schritten auf dem Gleitelement abgeschieden wird, wobei der erste Schritt bei einer unüblich hohen Stromdichte erfolgt, um eine Mikrostrukturierung der ersten Schicht zu erzeugen.

Gleitelemente, die mechanischen Beanspruchungen in Form von Reibung ausgesetzt sind, beispielsweise Gleitlager, müssen über gute Gleiteigenschaften, eine hohe Korrosionsbeständigkeit und eine ausreichende Verschleißbeständigkeit verfügen.

Zur Erzielung dieser Eigenschaften können Gleitelemente, insbesondere deren Laufflächen, mit Gleitschichten in Form von elektrolytische abgeschiedenen Metallen oder Metallegierungen versehen werden. Diese Beschichtungen sollten einerseits eine ausreichende Duktilität aufweisen und eine geringe Versprödungsneigung zeigen, insbesondere unter Belastung und bei hohen Temperaturen, und andererseits über eine hohe innere Festigkeit verfügen, um hohen Belastungen Stand zu halten. In der DE 197 54 221 A1 ist ein Schichtverbundwerkstoff beschrieben, dessen galvanisch aufgebrachte Gleitschicht unabhängig vom Kupfergehalt auch bei höheren Temperaturen keine Versprödung zeigt, wobei der Schichtverbundwerkstoff eine Gleitschicht mit 8-30 Gew.-% Kupfer, 60-97 Gew.% Zinn und 0,5-10 Gew.% Kobalt aufweist.

Zur Erzielung guter Gleiteigenschaften werden diese elektrolytisch abgeschiedenen Beschichtungen in der Regel mit möglichst glatten Oberflächen versehen. Die Gleiteigenschaften beschichteter Gleitelemente können zusätzlich durch einen Schmiermittelfilm verbessert werden. Zur besseren Haftung dieses Schmiermittelfilms an der Oberfläche und zur Erzielung besserer Notlaufeigenschaften kann eine Strukturierung der Laufflächen solcher Gleitelemente vorgesehen werden. Um eine Strukturierung der Oberfläche einer elektrolytisch abgeschiedenen Metall- oder Metallegierungsschicht zu erreichen, ist es bekannt, die Oberfläche des zu beschichtenden Gleitelements vor der elektrolytischen Abscheidung mechanisch oder mit Hilfe einer chemisch erzeugten Ätzung zu strukturieren.

Diese Verfahren haben jedoch den Nachteil, daß ein zeit- und kostenintensiver Strukturierungsschnitt vorgesehen werden muß. Ferner ist auf diese Weise in der Regel keine Mikrostrukturierung zu erreichen. Da zur Beschichtung von Gleitelementen, beispielsweise Gleitlagern, keine Beschichtungen aus sehr harten Metallen wie Chrom oder Titan hergenommen werden können, ist darüber hinaus bei diesen Verfahren des Standes der Technik häufig die innere Festigkeit und damit die Belastbarkeit der elektrolytisch abgeschiedenen Metallbeschichtungen nur unzureichend.

Der vorliegenden Erfindung liegt daher die Aufgabe zugrunde, ein verbessertes Verfahren zur Herstellung eines strukturiert beschichteten Gleitelements zur Verfügung zu stellen und ein nach diesem Verfahren erhältliches beschichtetes Gleitelement, das die oben beschriebenen Nachteile des Standes der Technik überwindet.

Erfindungsgemäß wird diese Aufgabe gelöst durch ein Verfahren zur Herstellung eines strukturiert beschichteten Gleitelements, bei dem Metall oder eine Metallegierung elektrolytisch auf dem Gleitelement abgeschieden wird und das elektrolytische Abscheiden in einem ersten Schritt zur Erzeugung einer ersten Schicht bei einer ersten Stromdichte erfolgt und anschließend zur Erzeugung einer darüber liegenden zweiten Schicht bei einer zweiten Stromdichte erfolgt, wobei die erste Stromdichte oberhalb einer maximalen Stromdichte liegt, bis zu der eine mikrostrukturfreie Schicht des Metalls oder der Metallegierung elektrolytisch abscheidbar ist und die zweite Stromdichte nicht höher als die maximale Stromdichte ist.

Mit diesem Verfahren ist überraschenderweise ein beschichtetes Gleitelement erhältlich, das eine hohe Belastbarkeit und eine gute Schmiermittelhaltefähigkeit aufweist, wobei der Schritt der vorherigen mechanischen Strukturierung der Oberfläche des zu beschichtenden Gleitelements vermieden wird.

Bei der Herstellung elektrochemischer Beschichtungen wird in der Regel eine für das Elektrolytsystem geeignete Beschichtungsstromdichte eingesetzt, um eine störungsfreie, gleichmäßige Metallbeschichtung zu erzielen. Diese Stromdichten sind jeweils für die Elektrolyten und damit für die elektrolytisch abzuscheidenden Metalle und Metallegierungen spezifisch und dem Fachmann bekannt.

Bei diesen Stromdichten wird eine Metall- oder eine Metallegierungsschicht abgeschieden, die keine eigene Mikrostrukturierung aufweist. Die Erfinder haben festgestellt, daß oberhalb einer bestimmten Stromdichte eine Mikrostrukturierung der abgeschiedenen Metall- oder Metallegierungsschicht erzeugt wird. Diese bestimmte Stromdichte ist die maximale Stromdichte, bei der eine mikrostrukturfreie Schicht des Metalls oder der Metallegierung noch elektrolytisch abgeschieden werden kann. Diese maximale Stromdichte kann der Fachmann in wenigen orientierenden Versuchen für das abzuscheidende Metall ermitteln.

Unter einer strukturfreien oder mikrostrukturfreien Beschichtung oder Schicht wird im Sinne der Erfindung verstanden, daß die Metallschicht oder Metallegierungsschicht keine eigene Mikrostrukturierung ausbildet, sondern sich auf der zu beschichtenden Oberfläche ablagert und dabei der Oberflächenstruktur dieser beschichteten Oberfläche folgt. Beispielsweise kann eine zu beschichtende Oberfläche sandgestrahlt sein und damit eine Makrostrukturierung aufweisen, der dann die Beschichtung bei der elektrolytischen Abscheidung folgt ohne jedoch zusätzlich eine eigene Mikrostrukturierung auszubilden.

Bei dem erfindungsgemäßen Verfahren wird die gleichmäßige elektrolytische Abscheidung des entsprechenden Metalls bzw. der Metallegierung im ersten Schritt zur Erzielung einer ersten Schicht bewußt gestört, indem die erste Stromdichte oberhalb einer maximalen Stromdichte liegt, bis zu der die entsprechende Metall- oder Metallegierungsschicht noch ohne eine eigene Mikrostrukturierung abgeschieden werden kann. Überraschenderweise wurde gefunden, daß so eine besondere Schichtstruktur und damit eine besondere Oberflächenstruktur der ersten Schicht erzeugt werden kann. Durch diese unüblich hohe Beschichtungsstromdichte oberhalb der maximalen Strcmdichte, bis zu der die Abscheidung einer mikrostrukturfreien Schicht des Metalls oder der Metallegierung noch möglich ist, wird eine Mikrostrukturierung in Form einer knospenförmigen und/oder dendritischen Struktur der ersten Schicht erzeugt.

Anschließend wird die elektrolytische Abscheidung in dem zweiten Schritt zur Erzeugung einer darüber liegenden zweiten Schicht bei einer Beschichtungsstromdichte durchgeführt, die nicht höher als die oben genannte maximale Stromdichte ist. Die zweite Schicht, die dann keine eigene Mikrostruktur aufweist, folgt der Mikrostrukturierung der ersten Schicht, wobei die Mikrostruktur der ersten Schicht in der zweiten Schicht in der Regel weniger stark ausgeprägt ist. Die knospenförmige und/oder dendritische Struktur der ersten Schicht (Grundschicht) führt bei diesem zweistufigen Verfahren so zu einer besonderen Mikrostrukturierung der Oberfläche der zweiten Schicht, d. h. zu einer Mikrostrukturierung der Oberfläche der aufgebrachten Beschichtung. Überraschenderweise führt diese Beschichtung zu einer hohen Verschleißbeständigkeit des beschichteten Gleitelements, bei gleichzeitig sehr gutem Schmiermittelhaltevermögen der Oberfläche.

Die hohe Verschleißbeständigkeit der durch das erfindungsgemäße Verfahren erzeugten Beschichtung wird, ohne erfindungsgemäß daran gebunden zu sein, auf die Steigerung der inneren Festigkeit der aufgebrachten Beschichtung durch eine Änderung der Wachstumsrichtung der Kristallisation des elektrolytisch abgeschiedenen Metalls oder der elektrolytisch abgeschiedenen Metallegierung zurückgeführt.

Ferner wird die Hydrodynamik zwischen einem so beschichteten Gleitelement und einem Gleitpartner durch die Verbesserung der Konstanz des Schmiermittels positiv beeinflußt. Dadurch werden zusätzlich auch die Notlaufeigenschaften und die Beständigkeit des Gleitelements hinsichtlich des Adhäsiverschleißes deutlich erhöht. Ein weiterer Vorteil des erfindungsgemäßen Beschichtungsverfahren ist eine Verkürzung des Verfahrens, wodurch eine Zeitersparnis resultiert und die Herstellkosten gesenkt werden, da die bislang erforderliche, vorherige mechanische oder durch chemische Ätzung erzeugte Strukturierung des zu beschichtenden Gleitelements nicht mehr erforderlich ist.

Die Oberflächenstruktur des beschichteten Gleitelements, insbesondere die Rauhigkeit der Oberfläche und die Dichte der Oberflächenstrukturen, kann über die Beschichtungsstromdichte im ersten Schritt der elektrolytischen Abscheidung, die die Ausprägung der Knospen und Dendriten beeinflußt, und die Schichtdicken der ersten Schicht und der zweiten Schicht gesteuert werden. Je höher die Stromdichte im ersten Schritt über der oben beschriebenen maximalen Stromdichte liegt, je größer die Schichtdicke der ersten Schicht ist und je geringer die Schichtdicke der darüber abgeschiedenen zweiten Schicht ist, desto rauher ist die erhaltende Oberfläche und desto dichter ist die erhaltene Oberflächenstruktur. Auf diese Weise kann die innere Festigkeit der Beschichtung und die Oberflächenstruktur an die Art der Verwendung des Gleitelementes und das einzusetzende Schmiermittel angepaßt werden. Beispielsweise kann die innere Festigkeit und die Oberflächenstruktur in Richtung einer hohen Belastbarkeit, bei z.B. Kurbelwellen von hochdrehenden Verbrennungsmotoren oder in Richtung einer hohen Laufleistung, bei z.B. Gleitlagern von Lkw-Verbrennungsmotoren optimiert werden.

Unter einem Gleitelement werden im Sinne der Erfindung Elemente verstanden, insbesondere Maschinenelemente, die eine Gleitfläche zur gleitenden Anlage an eine Gegenfläche aufweisen und die mit einer Gleit- und Verschleißschutzschicht versehen werden sollen. Dabei kann es sich um metallische oder nicht-metallische Gleitelemente handeln. Soll auf ein nicht metallisches Gleitelement eine Metall- oder Metallegierungsschicht abgeschieden werden, so wird das Gleitelement zunächst durch Aufbringen eines dünnen Metallfilms elektrisch leitend gemacht. Die erfindungsgemäße Beschichtung kann zur Beschichtung unterschiedlicher Gleitelemente eingesetzt werden, beispielsweise Gleitlagern, Buchsen Zylindern, Kolben, Bolzen, Dichtungen, Ventilen und Druckzylindern. Bevorzugte Gleitelemente sind Gleitlager, insbesondere Gleitlager für Kraftfahrzeuge, zum Beispiel Kurbelwellentager, Nockenwellenlager oder Pleuellager.

Das Gleitelement kann vor der Beschichtung mit dem erfindungsgemäßen Verfahren bereits mit zusätzlichen Metall- oder Metallegierungsschichten versehen sein. Beispielsweise weist ein Gleitlager in der Regel folgenden Schichtaufbau auf: Stahl (Material des Gleitlagers), Lagermetallschicht, gegebenenfalls eine Dammschicht, Gleitschicht, gegebenenfalls eine Einlaufschicht. Die Lagermetallschicht kann beispielsweise eine Kupferlegierungsschicht, insbesondere eine gesinterte und gegossene Kupferlegierungsschicht sein. Die Dammschicht kann als Diffusionssperre dienen und die Gleitschicht wiederum kann durch das erfindungsgemäße Verfahren aufgebracht werden. Das erfindungsgemäße Beschichtungsverfahren kann zur Beschichtung der gesamten Oberfläche des Gleitelements oder nur zur Beschichtung der Gleitflächen des Gleitelements eingesetzt werden.

Als Beschichtungsmaterialien sind alle Metalle und Metallegierungen geeignet, die eine für das jeweilige Gleitelement und dessen gewünschte Verwendung hinreichende Duktilität und Festigkeit aufweisen. Die erste und die zweite Schicht können dasselbe Metall oder dieselbe Metallegierung oder verschiedene Metalle oder Metallegierungen umfassen. Wenn die erste und die zweite Schicht verschiedene Metalle oder Metallegierungen umfassen stollen, wird vor der Durchführung des zweiten elektrolytischen Abscheidungsschritts der Elektrolyt gewechselt.

Geeignete Metalle und Metallegierungen für die erste Schicht und die darauf abgeschiedene zweite Schicht sind unabhängig voneinander Aluminium, Antimon, Wismut, Blei, Eisen, Gold, Kupfer, Nickel, Kobalt, Silber, Zink und Zinn sowie deren Legierungen. Bevorzugt sind Zinn, Nickel, Silber, Wismut sowie deren Legierungen.

Für die erste Schicht sind Zinn oder Nickel als Hauptbestandteile, bezogen auf die Masse, enthaltende Schichten besonders bevorzugt, d.h. Schichten aus Zinn, Nickel, Zinn-basierten Legierungen und Nickel-basierten Legierungen. Besonders bevorzugte Materialien für die zweite Schicht sind als Hauptbestandteile, bezogen auf die Masse, Zinn, Silber oder Wismut enthaltende Schichten. Diese Materialien liefern eine besonders hoch belastbare und gleichzeitig ausreichend duktile strukturierte Beschichtung nach dem erfindungsgemäßen Verfahren.

Unter den Zinnlegierungen und den Zinn-basierten Legierungen sind Zinn-Legierungen mit den Metallen Antimon, Blei, Kupfer, Silber, Wismut Kobalt und/oder Nickel bevorzugt. Beispiele sind Zinn-Antimon-Legierungen, Zinn-Kupfer-Legierungen, Zinn-Wismut-Legierungen und Zinn-Blei-Legierungen, insbesondere solche, die als Hauptbestandteil, bezogen auf die Masse, Zinn enthalten und bevorzugt zusätzlich Silber, Kobalt, Aluminium, Eisen und/oder Nickel enthalten. Der Zinngehalt der Zinn-basierten Legierungen beträgt bevorzugt 60-98 Gew.%. Unter den Nickel-basierten Legierungen sind Nickel-Legierungen mit den Metallen Antimon, Blei, Kupfer, Silber, Wismut, Kobalt und/oder Zinn bevorzugt.

Erfindungsgemäß besonders bevorzugt sind unabhängig voneinander für die erste und die zweite Schicht Zinn-Kupfer-Legierungen mit 60-98 Gew.-% Zinn und 2-40 Gew.-% Kupfer sowie Zinn-Kupfer-Kobalt-Legierungen mit 60-98 Gew.-% Zinn, 1-30 Gew.-% Kupfer und 1-10 Gew.-% Kobalt, die jeweils bevorzugt zusätzlich Silber, Wismut und/oder Nickel als Legierungsbestandteile enthalten können.

Die erste Stromdichte zur Abscheidung einer als Hauptbestandteil, bezogen auf die Masse, Zinn enthaltenden Schicht beträgt vorzugsweise mindestens 4,5 A/dm² , besonders bevorzugt mindestens 5 A/dm², weiter bevorzugt mindestens 8 A/dm² , noch weiter bevorzugt mindestens 10 A/dm² und am meisten bevorzugt 10-25 A/dm². Die erste Stromdichte zur Abscheidung einer als Hauptbestandteil, bezogen auf die Masse, Nickel enthaltenden Schicht beträgt vorzugsweise mindestens 6 A/dm², besonders bevorzugt mindestens 8 A/dm², weiter bevorzugt mindestens 10 A/dm², noch weiter bevorzugt mindestens 13 A/dm² und am meisten bevorzugt 13-25 A/dm². Bei diesen Stromdichten werden besonders günstige Mikrostrukturierungen der Zinn- oder Nickel-basierten ersten Schicht erhalten, die zu hoch belastbaren beschichteten Gleitflächen führen.

Die oben beschriebenen, im zweiten Schritt angewandten Stromdichten zur Abscheidung einer Metall- oder Metallegierungsschicht ohne eigene Mikrostruktur hängen von dem abzuscheidenden Metall und von dem verwendeten Elektrolyten ab. Erfindungsgemäß beträgt die zweite Stromdichte zur Abscheidung einer bezogen auf die Masse als Hauptbestandteil Zinn oder Bismuth enthaltenden Schicht nicht mehr 4 A/dm² (Ampere pro Quadratdezimeter), bevorzugt nicht mehr als 3 A/dm² , besonders bevorzugt 0,5-3 A/dm² und noch weiter bevorzugt 0.5-2.5 A/dm². Zinn als Hauptbestandteil, bezogen auf die Masse, enthaltende Schichten sind Zinnschichten, die zu 100 Gew.% oder nahezu 100 Gew.% aus Zinn bestehen und lediglich die üblichen Verunreinigungen enthalten sowie Legierungen, deren Gewichtsanteil an Zinn höher als der Gewichtsanteil der restlichen Legierungsbestandteile ist. Zur Abscheidung einer als Hauptbestandteil, bezogen auf die Masse, Silber enthaltenden Schicht beträgt die zweite Stromdichte nicht mehr 0,9 A/dm², bevorzugt 0,3-0,75 A/dm². besonders bevorzugt 0,5-0,75 A/dm². Zur Abscheidung einer als Hauptbestandteil, bezogen auf die Masse, Nickel enthaltenden Schicht beträgt die zweite Stromdichte nicht mehr 7 A/dm², bevorzugt nicht mehr als 6 A/dm² und besonders bevorzugt 1-5 A/dm².

Erfindungsgemäß bevorzugt ist ein Verfahren zur Herstellung eines strukturiert beschichteten Gleitelements, bei dem Metall oder eine Metallegierung elektrolytisch auf dem Gleitelement abgeschieden wird und das elektrolytische Abscheiden in einem ersten Schritt zur Erzeugung einer ersten Schicht bei einer ersten Stromdichte erfolgt und anschließend zur Erzeugung einer darüber liegenden zweiten Schicht bei einer zweiten Stromdichte erfolgt, wobei im ersten Schritt eine als Hauptbestandteil, bezogen auf die Masse, Zinn enthaltende Schicht abgeschieden wird und die erste Stromdichte mindestens 4,5 A/dm² beträgt oder eine als Hauptbestandteil, bezogen auf die Masse, Nickel enthaltende Schicht abgeschieden wird und die erste Stromdichte mindestens 6 A/dm² beträgt. Auf diese Weise wird eine mikrostrukturierte erste Schicht erhalten. Vorzugsweise ist die erste Stromdichte größer als die zweite Stromdichte.

Weiter ist es bevorzugt, daß im zweiten Schritt eine, bezogen auf die Masse, als Hauptbestandteil Zinn oder Wismut enthaltende Schicht abgeschieden wird und die zweite Stromdichte nicht größer als 4 A/dm² ist. Es ist auch bevorzugt, daß im zweiten Schritt eine, bezogen auf die Masse, als Hauptbestandteil Silber enthaltende Schicht abgeschieden wird und die zweite Stromdichte nicht größer als 0,9 A/dm² ist. So wird eine zweite Schicht aus Zinn, Silber oder Wismut enthalten, die keine eigene Mikrostruktur aufweist.

Die elektrolytische Abscheidung auf der Oberfläche des Gleitelementes findet aus einem Elektrolyten statt. Unter einem Elektrolyten wird im Sinne der Erfindung eine wäßrige Lösung verstanden, deren elektrische Leitfähigkeit durch elektrolytische Dissoziation in Ionen zustande kommt. Der Elektrolyt enthält daher das Metall oder die Metalle zur Ausbildung der Metallegierung in Form von Ionen und darüber hinaus die dem Fachmann bekannten üblichen Elektrolysehilfsmittel, wie beispielsweise Säuren und Salze sowie als Rest Wasser.

Das erfindungsgemäße Verfahren wird bevorzugt in einem Elektrolyten durchgeführt, der 80-300 g/l (Gramm pro Liter) Methansulfonsäure enthält. Weiter ist es bevorzugt, daß der Elektrolyt ein oder mehrere Mono- oder Polyhydroxybenzol(e) und/oder β-Naphtholethoxylat enthält. Ein besonders bevorzugter Elektrolyt zur Durchführung des erfindungsgemäßen Verfahrens umfaßt 1-150 g/l abscheidbares Metall oder abscheidbare Metalle in Ionenform, 80-300 g/l Methansulfonsäure, bevorzugt 80-250 g/l Methansulfonsäure, 1-5 g/l Mono- oder Polyhydroxybenzol, 30-45 g/l Cerolyt BMM-T (Firma Enthone) und den Rest Wasser. Cerolyt BMM-T ist eine Elektrolysehilfsubstanz, die als Hauptbestandteil β-Naphtholethoxylat enthält. Als Polyhydroxybenzol sind die Di-, Tri- und Tetrahydroxybenzole geeignet, bevorzugt sind Dihydroxybenzole, unter denen Resorcin besonders bevorzugt ist.

Ein weiterer bevorzugter Elektrolyt zur Durchführung des erfindungsgemäßen Verfahrens umfaßt 1 bis 150 g/l (Gramm pro Liter) abscheidbares Metall oder Metalle in Ionenform, 30-45 g/l HBF₄, 1-20 g/l Mono- oder Polyhydroxybenzol, gegebenenfalls 15-30 mg/l nicht-ionisches Netzmittel und den Rest Wasser sowie Borsäure zur Absättigung des Elektrolyten. Als Polyhydroxybenzol sind Di-, Tri- und Tetrahydroxybenzole geeignet, bevorzugt sind Dihydroxybenzole, unter denen Resorcin besonders bevorzugt ist. Bevorzugte nichtionische Netzmittel sind Fettsäureglykolester. Elektrolytische Abscheidungen mit diesem Elektrolyten sind beispielsweise in der EP 0 882 145 beschrieben.

Das erfindungsgemäße Verfahren kann auch in einem im Stand der Technik üblicherweise verwendeten Cyanid-Elektrolyten durchgeführt werden. Cyanid-Elektrolyten enthalten in der Regel als Hauptbestandteile der gelösten Komponenten Cyanid- und Hydroxidsalze, insbesondere in Form von Kalium- oder Natriumcyanid und Kalium- oder Natriumhydroxid.

Diese Elektrolyten, insbesondere der oben beschriebene, Methansulfonsäure enthaltende Elektrolyt, haben sich als besonders geeignet für die Ausbildung der Strukturierung und die innere Festigkeit der erfindungsgemäßen Beschichtung erwiesen.

Über die elektrolytische Beschichtungsdauer, d. h. den Zeitraum der Abscheidung, kann die gewünschte Schichtdicke eingestellt werden. Üblicherweise beträgt die Beschichtungsdauer im ersten Schritt 5 bis 60 Sekunden und im zweiten Schritt 5 bis 25 Minuten. Die Temperatur des Elektrolyten für die Abscheidung des Metalls oder der Metallegierung beträgt üblicherweise 20-90 °C, bevorzugt 20-50 °C.

Als geeignete Schichtdicken haben sich für die erste Schicht 0,1 bis 3 µm und für die darauf abgeschiedene zweite Schicht 3 bis 60 µm erwiesen. Bevorzugt liegt die Schichtdicke der ersten Schicht im Bereich von 0,3 bis 2 µm, besonders bevorzugt im Bereich von 0,5 bis 1,5 µm. Die Schichtdicke der darauf abgeschiedenen zweiten Schicht liegt bevorzugt im Bereich von 4 bis 25 µm und besonders bevorzugt im Bereich von 5 bis 12 µm.

Die Stromdichte (Beschichtungsstromdichte) im ersten Schritt des erfindungsgemäßen Verfahrens ist bevorzugt mindestens 1,5 mal höher als die Stromdichte im zweiten Schritt. Unter einer n-mal höheren Stromdichte wird eine durchschnittlich n-fache Beschichtungsstromdichte verstanden. Bevorzugt ist die Stromdichte im ersten Schritt mindestens 2 mal höher, besonders bevorzugt mindestens 3 mal höher und noch weiter bevorzugt mindestens 4 mal höher als im zweiten Schritt. Diese Verhältnisse der ersten zur zweiten Stromdichte haben sich als besonders vorteilhaft für die innere Festigkeit und die Strukturierung der Gesamtbeschichtung erwiesen.

In einer besonders bevorzugten Ausführungsform enthalten die erste und/oder die zweite Schicht zusätzlich Feststoffpartikel. Durch die Einlagerung von Feststoffpartikeln können überraschenderweise die Verschleißbeständigkeit und die Notlaufeigenschaften der erfindungsgemäßen Beschichtung noch weiter verbessert werden.

Die Erfindung betrifft somit in einer bevorzugten Ausführungsform ein Verfahren, bei dem in die erste und/oder die zweite Schicht Feststoffpartikel eingelagert werden. Zur Herstellung der Feststoffpartikel enthaltenden Schicht wird die elektrolytische Abscheidung in Gegenwart von Feststoffpartikeln durchgeführt. Die Feststoffpartikel sind vorteilhafterweise in dem Elektrolyten dispergiert. Die Feststoffpartikel lagern sich bei der Abscheidung an Unebenheiten der Oberfläche an und werden durch das nachfolgend abgeschiedene Metall eingekapselt und/oder an der Oberfläche fixiert.

Bevorzugt werden als Feststoffpartikel Hartstoffpartikel aus Wolframkarbid, Chromkarbid, Aluminiumoxid, Siliziumkarbid, Siliziumnitrid, Borkarbid und/oder Diamant eingesetzt. Die Korngröße der Feststoffpartikel liegt bevorzugt im Bereich von 0,1 bis 5 µm. Besonders bevorzugt sind als Feststoffpartikel Diamanten und unter diesem wiederum sind solche mit einer Größe im Bereich von 0,25-0,4 µm bevorzugt. Ferner sind Aluminiumoxid-Partikel mit einer Partikelgröße im Bereich von etwa 0,2-5 µm bevorzugt. Eingelagerte Diamantpartikel können aus mono- und/oder polykristallinem Diamant gebildet sein. Mit polykristallinem Diamant werden häufig die besseren Ergebnisse erzielt, da ein polykristalliner Diamant aufgrund der vielen verschiedenen Kristalle zahlreiche Gleitebenen aufweist. Die Feststoffpartikel oder Hartstoffpartikel können auch eine Mischung von Feststoffpartikeln verschiedener Stoffarten in Kombination sein.

Zur Verbesserung der Gleitfähigkeit können in der Feststoffpartikel enthaltenden Schicht zusätzlich Festschmierstoffpartikel enthalten sein, wodurch die Schicht an die jeweilige Anwendung angepaßt werden kann. Als Festschmierstoffteilchen können beispielsweise hexagonales Bornitrid, Graphit und/oder Polymerteilchen, insbesondere aus Polyethylen und/oder Polytetrafluorethylen, in die Schicht eingelagert werden.

Der erste und zweite elektrolytische Abscheidungsschritt können, gegebenenfalls mehrfach, wiederholt werden, so daß die erste und zweite Schicht wechselseitig aufeinander abgeschieden werden. Beispielsweise können auf diese Weise vier, sechs, acht, zehn oder zwölf Schichten aufeinander abgeschieden werden, so daß die erste Schicht, die eine knospenförmige und/oder dendritische Struktur aufweist, und die zweite Schicht abwechselnd auf dem Gleitelement aufgebracht sind. Auf diese Weise kann eine abhängig vom Material und der gewünschten Verwendung optimale Beschichtung erzeugt werden. Insbesondere kann durch das Wiederholen des ersten und zweiten Schritts eine noch höhere innere Festigkeit und damit eine höhere Belastbarkeit der Beschichtung erzielt werden.

Des weiteren kann in der ersten und/oder der zweiten Schicht ein Gradientenaufbau erzeugt werden, indem beispielsweise bei einem Stromdichtegradienten oder einem Konzentrationsgradienten beschichtet wird. So kann zum Beispiel in der ersten Schicht eine abnehmende Mikrostrukturierung durch eine abnehmende Stromdichte im ersten Schritt erzeugt werden und die Mikrostrukturierung so an das abzuscheidende Material und die gewünschte Verwendung angepaßt werden.

Bei dem erfindungsgemäßen Beschichtungsverfahren kann es günstig sein, unter der ersten Schicht (Grundschicht), die eine Mikrostrukturierung aufweist, zur besseren Haftung dieser ersten Schicht und/oder als Diffusionssperre auf dem Gleitelement eine Unterschicht aus Metall oder einer Metallegierung aufzubringen, bevorzugt durch elektrolytische Abscheidung. Es ist daher erfindungsgemäß bevorzugt, vor dem ersten Schritt zur Erzeugung der ersten Schicht eine Unterschicht aus Metall oder einer Metallegierung elektrolytisch abzuscheiden.

Eine Diffusionssperre ist insbesondere dann von Vorteil, wenn das unter der ersten Schicht befindliche Metall mit steigender Nutzungsdauer des Gleitelements in die erste Schicht diffundiert und dabei die Eigenschaften des Gleitelements verschlechtert. Beispielsweise diffundiert Kupfer häufig in darüber abgeschiedene Zinnschichten, wodurch sich Sprödphasen bilden und die aufgebrachte Zinnschicht abplatzen kann.

Die Unterschicht kann aus demselben Metall oder derselben Metallegierung wie die anderen Schichten sein oder ein anderes Metall oder eine andere Metallegierung umfassen. Für die Unterschicht sind Zinn, Nickel, Eisen, Gold, Kobalt, Kupfer, Silber und deren Legierungen bevorzugt. Besonders bevorzugt sind Nickel und Nickel-Legierungen, da sie hervorragend als Diffusionssperren wirken. Die Unterschicht wird in der Regel mit Hilfe konventioneller Verfahren aufgebracht, d. h. sie weist keine eigene Mikrostrukturierung auf. Es kann jedoch auch die Unterschicht bereits mit dem erfindungsgemäßen Verfahren aufgebracht werden, so daß die Unterschicht dann eine eigene Mikrostrukturierung besitzt.

Über der zweiten Schicht kann zusätzlich eine Einlaufschicht aufgebracht werden, die das Einlaufen des Gleitelements erleichtert. Dabei kann es sich um eine weitere elektrolytische abgeschiedene Metall- oder Metallegierungsschicht oder eine durch PVD- oder CVD-Verfahren aufgebrachte Schicht handeln. Als Einlaufschichten sind elektrolytisch abgeschiedene Schichten auf Molybdänbasis, PVD- und CVD-Schichten bevorzugt. Es ist daher erfindungsgemäß bevorzugt, im Anschluß an den zweiten Schritt zur Erzeugung einer zweiten Schicht eine Einlaufschicht aufzubringen, bevorzugt durch elektrolytischen Abscheidung oder durch ein PVD- oder CVD-Verfahren.

Unter einer PVD-Schicht wird im Sinne der Erfindung eine durch PVD (Physical Vapor Deposition) abgeschiedene Schicht auf einem Gleitelement verstanden. PVD-Verfahren sind dem Fachmann an sich bekannt. Dabei wird das Schichtausgangsmaterial durch Laser-, lonenoder Elektronenstrahlen oder durch Lichtbogenentladung, meist unter vermindertem Druck bei etwa 1-1000 Pa, verdampft und die PVD-Schicht durch Kondensation des Materialdampfes auf dem Substrat ausgebildet. Bei Bedarf kann auch ein geeignetes Prozeßgas zugeführt werden.

Unter einer CVD-Schicht wird im Sinne der Erfindung eine durch CVD (Chemical Vapor Deposition) auf einem Gleitelement abgeschiedene Schicht verstanden. CVD-Verfahren sind dem Fachmann an sich bekannt. Bei einem CVD-Verfahren wird ein Feststoff aus der Gasphase an der erhitzten Oberfläche eines Substrats durch eine chemische Reaktion abgeschieden. In der Regel werden auch CVD-Verfahren unter vermindertem Druck bei etwa 1-1000 Pa durchgeführt.

Als PVD- oder CVD-Schichten eignen sich erfindungsgemäß alle durch PVD- oder CVD-Verfahren erhältlichen Beschichtungen. Bevorzugte PVD- und CVD-Schichten sind AlSn₂₀Cu und AlSn₂₀Fe.

Die Einlaufschicht wird erfindungsgemäß in einer Schichtdicke aufgebracht, so daß Sie nach einer gewissen Nutzungszeit, insbesondere nach der Einlaufphase, so weit abgetragen ist, daß die darunterhegende zweite Schicht, die eine strukturierte Oberfläche aufweist, zum Vorschein kommt. Auf diese Weise verbleibt nach der Abtragung der oberen Einlaufschicht zumindest ein Teil des in den Vertiefungen der darunter liegenden strukturierten Schicht befindliche Materials, so daß die Oberfläche dann von den Erhebungen der strukturierten zweiten Schicht und dem in den Vertiefungen dieser strukturierten Schicht verbleibenden Material der aufgebrachten Einlaufschicht gebddet wird.

Die Schichtdicke der Einlaufschicht, beispielsweise der PVD- oder CVD-Schicht, beträgt bevorzugt 4-12 µm, besonders bevorzugt 4-8 µm, noch weiter bevorzugt 5-6 µm. Da die Einlaufschicht auf eine strukturierte Schicht aufgebracht ist, wird im Sinne der Erfindung unter einer Einlaufschicht auch ein abgeschiedenes Material verstanden, das die Täler der darunter liegenden strukturierten Schicht ganz oder teilweise füllt und dabei die darüberliegende strukturierte Schicht vollständig bedeckt oder nur teilweise bedeckt oder lediglich die Täler der darunterliegenden strukturierten Schicht ganz oder teilweise füllt, ohne eine durchgängige Schicht im Sinne einer vollständigen Beschichtung zu bilden. Die Schichtdicke ist im zuletzt genannten Fall der Mittelwert aus der Höhe der Füllung der Täler.

Die vorliegende Erfindung bezieht sich ferner auf ein strukturiert beschichtetes Gleitelement, das nach dem erfindungsgemäßen Verfahren erhältlich ist, insbesondere ein Gleitlager, z.B. Kurbelwellen-, Nockenwellen- oder Pleuellager.

Die Erfindung betrifft somit auch ein strukturiert beschichtetes Gleitelement, mit einer Oberfläche, umfassend eine auf die Oberfläche aufgebrachte erste Metall- oder Metallegierungsschicht und eine darüber aufgebrachte zweite Metall- oder Metallegierungsschicht, wobei die erste Metall- oder Metallegierungsschicht eine Mikrostrukturierung aufweist und die zweite Metall- oder Metallegierungsschicht keine eigene Mikrostrukturierung aufweist. Die Oberfläche kann die gesamte Oberfläche des Gleitelements sein oder nur die Gleitfläche(n) des Gleitelements umfassen. Bevorzugt enthält die erste Metall- oder Metallegierungsschicht als Hauptbestandteil, bezogen auf die Masse, Zinn oder Nickel. Die zweite Metall- oder Metallegierungsschicht enthält bevorzugt Zinn, Silber oder Wismut, insbesondere als Hauptbestandteil, bezogen auf die Masse. Die Mikrostrukturierung der ersten Schicht ist bevorzugt knospenförmig und/oder dendritisch. Die zweite Schicht folgt der Mikrostruktur der ersten Schicht und weist daher eine Oberflächen-Mikrostruktur auf.

In einer bevorzugten Ausführungsform betrifft die Erfindung ferner ein strukturiert beschichtetes Gleitelement, das zusätzlich zu der ersten und zweiten Schicht eine unter der ersten Schicht angeordnete Unterschicht aus Metall oder einer Metallegierung umfaßt. Die Unterschicht kann vorteilhafterweise zur Vermittlung einer besseren Haftung der ersten Schicht auf dem Gleitelement beitragen und/oder als Diffusionssperre dienen.

Weiter betrifft die Erfindung ein beschichtetes Gleitelement, das zusätzlich zu der ersten und zweiten Schicht und gegebenenfalls der oben beschriebenen Unterschicht über der zweiten Schicht eine Einlaufschicht umfaßt. Die Einlaufschicht ist bevorzugt eine elektrolytisch abgeschiedene Metall- oder Metallegierungsschicht, eine PVD- oder CVD-Schicht.

Das erfindungsgemäße, strukturiert beschichtete Gleitelement weist die oben im Zusammenhang mit dem Verfahren beschriebenen Vorteile auf. Die bei dem erfindungsgemäßen Verfahren beschriebenen, geeigneten, bevorzugten und besonders bevorzugten Ausgestaltungen sind bei dem erfindungsgemäßen, beschichteten Gleitelement ebenfalls geeignet, bevorzugt und besonders bevorzugt.

Es versteht sich, daß die vorstehend genannten und die nachstehend noch erläuterten Merkmale nicht nur in den angegebenen Kombinationen, sondern auch in anderen Kombinationen oder in Alleinstellung einsetzbar sind, ohne den Rahmen der vorliegenden Erfindung zu verlassen.

Die nachfolgenden Beispiele erläutern die Erfindung.

Es wir ein Elektrolyt folgender Zusammensetzung hergestellt:

| | |
|---|---|
| Sn²⁺-Gehalt (als Zinn(II)methansulfonat zugesetzt) | 30 g/l |
| Cu²⁺-Gehatt (als Kupfer(II)methansulfonat zugesetzt) | 5 g/l |
| Methansulfonsäure | 250 g/l |
| Resorcin | 2,5 g/l |
| Cerolyt BMM-T (Firma Enthone) | 30 g/l |

Ein Gleitlager wird in den Elektrolyten eingebracht und das Gleitlager bei 30° C 20 Sekunden bei einer Stromdichte von 10 A/dm² beschichtet. Anschließend wird bei einer Stromdichte von 2 A/dm² für weitere 13 Minuten beschichtet.

### Vergleichsversuch:

Ein identisches Gleitlager wird in den Elektrolyten mit der gleichen Zusammensetzung wie im obigen Beispiel beschrieben für 14 Minuten bei einer Stromdichte von 2 A/dm² beschichtet.

Anschließend wurde die Belastbarkeit mit Underwood-Tests geprüft. Hierbei rotiert eine Welle mit Exzentergewichten in starr montierten Pleuelstangen. Die Lagerung in den Pleuelstangen wird durch die Prüflager gebildet. Die Prüflager haben eine Wanddicke von 1,4 mm und einen Durchmesser von 50 mm. Über die Lagerbreite wird die spezifische Belastung eingestellt. Die Drehzahl beträgt 4000 Umdrehungen/min. Es wurde die maximale Belastbarkeit in Megapascal (MPa) ohne Gleitschichtermüdung nach 250 h Dauerlauf gemessen.

Die Ergebnisse sind in der nachfolgenden Tabelle aufgeführt:

| | Belastbarkeit |
|---|---|
| erfindungsgemäß beschichtetes Gleitlager | 90 MPa |
| Vergleichsversuch | 70 MPa |

Die obigen Versuche zeigen, daß das nach dem erfindungsgemäßen Verfahren beschichtete Gleitlager eine deutlich verbesserte Belastbarkeit gegenüber dem nach herkömmlichen Verfahren beschichteten Gleitlager aufweist. Ferner zeigte das erfindungsgemäß beschichtete Gleitlager gegenüber dem im Vergleichsversuch beschichteten Gleitlager eine deutlich verbesserte Schmiermittelhaltefähigkeit, wie durch Inaugenscheinnahme überprüft wurde. Diese erhöhte Schmiermittelhaltefähigkeit verbessert die Gleiteigenschaften und die Notlaufeigenschaften des erfindungsgemäß beschichteten Gleitlagers.

## Patentansprüche

1. Verfahren zur Herstellung eines strukturiert beschichteten Gleitelements, bei dem Metall oder eine Metallegierung elektrolytisch auf einem Gleitelement abgeschieden wird und das elektrolytische Abscheiden in einem ersten Schritt zur Erzeugung einer ersten Schicht bei einer ersten Stromdichte erfolgt und anschließend zur Erzeugung einer darüber liegenden zweiten Schicht bei einer zweiten Stromdichte erfolgt, **dadurch gekennzeichnet, daß** die erste Stromdichte oberhalb einer maximalen Stromdichte liegt, bis zu der eine mikrostrukturfreie Schicht des Metalls oder der Metallegierung elektrolytisch abscheidbar ist und die zweite Stromdichte nicht höher als die maximale Stromdichte ist, wobei das Metall oder die Metallegierung der ersten und zweiten Schicht unabhängig voneinander Aluminium, Antimon, Wismut, Blei, Eisen, Gold, Kupfer, Nickel, Kobalt, Silber, Zink, Zinn oder deren Legierungen sind.

2. Verfahren zur Herstellung eines strukturiert beschichteten Gleitelements, bei dem Metall oder eine Metallegierung elektrolytisch auf einem Gleitelement abgeschieden wird und das elektrolytische Abscheiden in einem ersten Schritt zur Erzeugung einer ersten Schicht bei einer ersten Stromdichte erfolgt und anschließend zur Erzeugung einer darüber liegenden zweiten Schicht bei einer zweiten Stromdichte erfolgt, **dadurch gekennzeichnet, daß** im ersten Schritt eine als Hauptbestandteil, bezogen auf die Masse, Zinn enthaltende Schicht abgeschieden wird, die erste Stromdichte mindestens 4,5 A/dm² beträgt oder eine als Hauptbestandteil, bezogen auf die Masse, Nickel enthaltende Schicht abgeschieden wird, die erste Stromdichte mindestens 6 A/dm² beträgt und die erste Stromdichte größer als die zweite Stromdichte ist.

3. Verfahren nach Anspruch 1 oder 2, **dadurch gekennzeichnet, daß** die erste Stromdichte mindestens 8 A/dm² beträgt.

4. Verfahren nach einem der Ansprüche 1 bis 3, **dadurch gekennzeichnet, daß** im zweiten Schritt eine als Hauptbestandteil, bezogen auf die Masse, Zinn oder Bismuth enthaltende Schicht abgeschieden wird und die zweite Stromdichte nicht größer als 4 A/dm² ist oder eine als Hauptbestandteil, bezogen auf die Masse, Silber enthaltende Schicht abgeschieden wird und die zweite Stromdichte nicht größer als 0,9 A/dm² ist.

5. Verfahren nach einem der Ansprüche 1 bis 4, **dadurch gekennzeichnet, daß** im ersten Schritt aus einem Elektrolyten abgeschieden wird, der 80-300 g/l Methansulfonsäure enthält.

6. Verfahren nach einem der Ansprüche 1 bis 5, **dadurch gekennzeichnet, daß** die erste Schicht eine Schichtdicke von 0,1 bis 3 µm und die zweite Schicht eine Schichtdicke von 3 bis 60 µm aufweist.

7. Verfahren nach einem der Ansprüche 1 bis 6, **dadurch gekennzeichnet, daß** auf dem Gleitelement vor dem ersten Schritt eine Unterschicht aus Metall oder einer Metallegierung aufgebracht wird.

8. Verfahren nach einem der Ansprüche 1 bis 7, **dadurch gekennzeichnet, daß** nach dem zweiten Schritt eine Einlaufschicht aufgebracht wird.

9. Verfahren nach Anspruch 8, **dadurch gekennzeichnet, daß** die Einlaufschicht eine PVD-oder CVD-Schicht ist.

10. Verfahren nach einem der Ansprüche 1 bis 9, **dadurch gekennzeichnet, daß** der erste und/oder zweite Schritt in Gegenwart von Feststoffpartikeln durchgeführt wird, die in die erste und/oder zweite Schicht eingelagert werden.

11. Verfahren nach einem der Ansprüche 1 bis 10, **dadurch gekennzeichnet, daß** nach dem zweiten Schritt der erste und zweite Schritt, gegebenenfalls mehrfach, wiederholt werden.

12. Beschichtetes Gleitelement, mit einer Oberfläche, umfassend eine auf die Oberfläche aufgebrachte erste Metall- oder Metallegierungsschicht und eine darüber aufgebrachte zweite Metall- oder Metallegierungsschicht, **dadurch gekennzeichnet, daß** die erste Metall- oder Metallegierungsschicht eine Mikrostrukturierung aufweist und die zweite Metall- oder Metallegierungsschicht keine eigene Mikrostrukturierung aufweist, wobei das Metall oder die Metallegierung der ersten und zweiten Schicht unabhängig voneinander Aluminium, Antimon, Wismut, Blei, Eisen, Gold, Kupfer, Nickel, Kobalt, Silber, Zink, Zinn oder deren Legierungen sind.

13. Beschichtetes Gleitelement nach Anspruch 12, **dadurch gekennzeichnet, daß** die erste Metall- oder Metallegierungsschicht als Hauptbestandteil, bezogen auf die Masse, Zinn oder Nickel enthält.

14. Beschichtetes Gleitelement nach Anspruch 12 oder 13, **dadurch gekennzeichnet, daß** die zweite Metall-oder Metallegierungsschicht als Hauptbestandteil, bezogen auf die Masse, Zinn, Silber oder Wismut enthält.

## Claims

1. Method for producing a sliding element coated in a structured manner, in which metal or a metal alloy is electrolytically deposited on a sliding element and the electrolytic deposition takes place at a first current density in a first step to produce a first layer and then takes place at a second current density to produce a second layer lying on top of it, **characterized in that** the first current density is higher than a maximum current density up to which a layer of the metal or the metal alloy without a microstructure can be electrolytically deposited and the second current density is not higher than the maximum current density, wherein the metal or the metal alloy of the first and second layer independently of one another are aluminium, antimony, bismuth, lead, iron, gold, copper, nickel, cobalt, silver, zinc, tin or their alloys.

2. Method for producing a sliding element coated in a structured manner, in which metal or a metal alloy is electrolytically deposited on a sliding element and the electrolytic deposition takes place at a first current density in a first step to produce a first layer and then takes place at a second current density to produce a second layer lying on top of it, **characterized in that** in the first step a layer containing tin as the main constituent, relative to the mass, is deposited and the first current density is at least 4.5 A/dm² or a layer containing nickel as the main constituent, relative to the mass, is deposited and the first current density is at least 6 A/dm², and the first current density is greater than the second current density.

3. Method according to claim 1 or 2, **characterized in that** the first current density is at least 8 A/dm².

4. Method according to one of claims 1 to 3, **characterized in that** in the second step a layer containing tin or bismuth as the main constituent, relative to the mass, is deposited and the second current density is not greater than 4 A/dm² or a layer containing silver as the main constituent, relative to the mass, is deposited and the second current density is not greater than 0.9 A/dm².

5. Method according to one of claims 1 to 4, **characterized in that** in the first step deposition is from an electrolyte containing 80-300 g/l methanesulfonic acid.

6. Method according to one of claims 1 to 5, **characterized in that** the first layer has a thickness of 0.1 to 3 µm and the second layer has a thickness of 3 to 60 µm.

7. Method according to one of claims 1 to 6, **characterized in that** a metal or a metal-alloy underlayer is applied to the sliding element before the first step.

8. Method according to one of claims 1 to 7, **characterized in that** a running-in layer is applied after the second step.

9. Method according to claim 8, **characterized in that** the running-in layer is a PVD or CVD layer.

10. Method according to one of claims 1 to 9, **characterized in that** the first and/or second step is carried out in the presence of solid particles, which are embedded in the first and/or second layer.

11. Method according to one of claims 1 to 10, **characterized in that** the first and second steps are repeated, optionally several times, after the second step.

12. Coated sliding element with a surface comprising a first metal or metal-alloy layer applied to the surface and a second metal or metal-alloy layer applied on top of it, **characterized in that** the first metal or metal-alloy layer has a microstructure and the second metal or metal-alloy layer has no microstructure of its own, wherein the metal or the metal alloy of the first and second layer independently of one another are aluminium, antimony, bismuth, lead, iron, gold, copper, nickel, cobalt, silver, zinc, tin or their alloys.

13. Coated sliding element according to claim 12, **characterized in that** the first metal or metal-alloy layer contains tin or nickel as the main constituent, relative to the mass.

14. Coated sliding element according to claim 12 or 13, **characterized in that** the second metal or metal-alloy layer contains tin, silver or bismuth as the main constituent, relative to the mass.

## Revendications

1. Procédé de fabrication d'un élément de glissement à revêtement structuré, dans lequel un métal ou un alliage métallique est déposé par voie électrolytique sur un élément de glissement, et le dépôt électrolytique a lieu dans une première étape pour la production d'une première couche en présence d'une première intensité de courant, puis a lieu pour la production d'une deuxième couche, disposée par-dessus, en présence d'une deuxième densité de courant, **caractérisé en ce que** la première densité de courant est supérieure à une densité de courant maximale jusqu'à laquelle une couche microstructurée du métal ou de l'alliage métallique peut subir un dépôt électrolytique, et la deuxième densité de courant n'est pas supérieure à la densité de courant maximale, le métal ou l'alliage métallique de la première et de la deuxième couches étant, d'une manière indépendante les uns des autres, l'aluminium, l'antimoine, le bismuth, le plomb, le fer, l'or, le cuivre, le nickel, le cobalt, l'argent, le zinc, l'étain ou les alliages de ceux-ci.

2. Procédé de fabrication d'un élément de glissement à revêtement structuré, dans lequel un métal ou un alliage métallique est déposé par voie électrolytique sur un élément de glissement, et le dépôt électrolytique a lieu dans une première étape pour la production d'une première couche en présence d'une première densité de courant, puis a lieu pour la production d'une deuxième couche, située par-dessus, en présence d'une deuxième densité de courant, **caractérisé en ce que**, dans la première étape, une couche contenant de l'étain en tant que constituant principal, rapporté à la masse, est déposée, couche qui a une densité de courant d'au moins 4,5 A/dm², ou une couche contenant du nickel en tant que constituant principal, rapporté à la masse, est déposée, la première densité de courant étant d'au moins 6 A/dm², et la première densité de courant étant supérieure à la deuxième densité de courant.

3. Procédé selon la revendication 1 ou 2, **caractérisé en ce que** la première densité de courant est d'au moins 8 A/dm².

4. Procédé selon l'une des revendications 1 à 3, **caractérisé en ce que**, dans la deuxième étape, une couche contenant de l'étain ou du bismuth en tant que constituant principal, rapporté à la masse, est déposée, et la deuxième densité de courant n'est pas supérieure à 4 A/dm², ou une couche contenant de l'argent en tant que constituant principal, rapporté à la masse, est déposée, et la deuxième densité de courant n'est pas supérieure à 0,9 A/dm².

5. Procédé selon l'une des revendications 1 à 4, **caractérisé en ce qu'**on procède dans la première étape à un dépôt à partir d'un électrolyte qui contient 80-300 g/l d'acide méthanesulfonique.

6. Procédé selon l'une des revendications 1 à 5, **caractérisé en ce que** la première couche présente une épaisseur de couche de 0,1 à 3 µm, et la deuxième couche présente une épaisseur de couche de 3 à 60 µm.

7. Procédé selon l'une des revendications 1 à 6, **caractérisé en ce qu'**on applique sur l'élément de glissement, avant la première étape, une sous-couche d'un métal ou d'un alliage métallique.

8. Procédé selon l'une des revendications 1 à 7, **caractérisé en ce qu'**on applique une couche de rodage après la deuxième étape.

9. Procédé selon la revendication 8, **caractérisé en ce que** la couche de rodage est une couche PVD ou CVD.

10. Procédé selon l'une des revendications 1 à 9, **caractérisé en ce que** la première et/ou la deuxième étapes sont mises en oeuvre en présence de particules solides, qui sont incorporées dans la première et/ou dans la deuxième couches.

11. Procédé selon l'une des revendications 1 à 10, **caractérisé en ce que**, après la deuxième étape, la première et la deuxième étapes sont répétées, éventuellement plusieurs fois.

12. Elément de glissement revêtu, ayant une surface, comprenant une première couche d'un métal ou d'un alliage métallique appliquée sur la surface, et une deuxième couche, appliquée par-dessus, d'un métal ou d'un alliage métallique, **caractérisé en ce que** la première couche d'un métal ou d'un alliage métallique présente une microstructuration, et la deuxième couche d'un métal ou d'un alliage métallique ne présente aucune microstructuration propre, le métal ou l'alliage métallique de la première et de la deuxième couches étant, d'une manière indépendante les uns des autres, l'aluminium, l'antimoine, le bismuth, le plomb, le fer, l'or, le cuivre, le nickel, le cobalt, l'argent, le zinc, l'étain ou les alliages de ceux-ci.

13. Elément de glissement revêtu selon la revendication 12, **caractérisé en ce que** la première couche d'un métal ou d'un alliage métallique contient de l'étain ou du nickel en tant que constituant principal, rapporté à la masse.

14. Elément de glissement revêtu selon la revendication 12 ou 13, **caractérisé en ce que** la deuxième couche d'un métal ou d'un alliage métallique contient de l'étain, de l'argent ou du bismuth en tant que constituant principal, rapporté à la masse.
